# DEMANDE DE BREVET EUROPEEN

(11) **EP 2 597 334 A1**
(43) Date de publication de la demande: **29.05.2013**
(21) Numéro de dépôt: 12190001.3
(22) Date de dépôt: 25.10.2012
(51) Int. Cl.: F16H 7/12, F16H 7/08

(54) **Dispositif de réglage d'une tension d'une courroie équipant un moteur à combustion interne**

(30) Priorité: 28.11.2011 FR 1160873
(71) Demandeur: PEUGEOT CITROËN AUTOMOBILES SA, 78140 Velizy-Villacoublay (FR)
(72) Inventeur: Quincerot, Julien, 91330 YERRES (FR)

(57) **Abrégé**

L'invention a pour objet un dispositif de réglage (1) d'une tension d'une courroie (2) équipant un moteur à combustion interne. Le dispositif de réglage (1) comprend une capsule (5) et un bras (4) mobile en rotation par rapport à la capsule (5). Le dispositif de réglage (1) comprend au moins un couple d'aimants permanents (18,18') comprenant un premier aimant permanent (18) et un deuxième aimant permanent (18').

## Description

L'invention relève du domaine des moyens pour faire varier une tension d'une courroie qui équipe un moteur à combustion interne. Elle a pour objet un dispositif de réglage de la tension de la courroie. Elle a aussi pour objet un système de transmission d'un couple-moteur fourni par le moteur à combustion interne, le système de transmission comprenant la courroie et un tel dispositif de réglage.

Le document FR 2,816,023 (Mitsubishi Denki Kabushiki Kaisha) décrit un dispositif de réglage d'une tension d'une courroie. Un tel dispositif comprend une poulie pouvant comporter une gorge périphérique circulaire pour la réception de la courroie à tendre. La poulie est montée mobile en rotation sur une platine qui est elle-même montée pivotante sur un support. La platine comprend un bras contre lequel un doigt constitutif d'un bouton-poussoir vient prendre appui. Le bouton-poussoir loge un ressort qui exerce une force de rappel pour maintenir en poussée le doigt contre le bras. Une telle poussée engendre un appui en force de la poulie contre la courroie, ce qui vise à garder la courroie sous tension.

Le bouton-poussoir est susceptible d'être équipé d'une bobine électromagnétique et d'un noyau électromagnétique mobile qui est adapté pour être attiré par une force d'attraction électromagnétique développée lors d'une excitation de la bobine électromagnétique, ce qui pousse le ressort.

Un tel dispositif de réglage est complexe et fragile, notamment dans le cas fréquent où la courroie est une courroie de transmission d'un moteur à combustion interne équipant un véhicule automobile, un véhicule poids lourd, un bateau, voire un groupe électrogène. Dans ces cas-là, le moteur à combustion interne fournit un couple-moteur qui est transmis par la courroie à d'autres accessoires. Le moteur à combustion interne subit des phases au cours desquelles une demande de couple-moteur varie entre des valeurs maximale et nulle. Il en résulte un acyclisme qui engendre des débattements importants de la courroie. Ces débattements provoquent des contraintes importantes qui affectent le ressort et qui sont susceptibles d'engendrer sa détérioration, voire sa casse.

Le but de la présente invention est de proposer un dispositif de réglage d'une tension d'une courroie en relation avec un moteur à combustion, un tel dispositif de réglage étant robuste et permettant de tendre la courroie sans risque de rupture, y compris lors de phases au cours desquelles une demande de couple-moteur fourni par le moteur à combustion interne varie entre des valeurs maximale et nulle, le dispositif de réglage étant agencé pour autoriser un calibrage d'un maintien en tension de la courroie, le dispositif de réglage étant apte à offrir une réponse non-linéaire à des sollicitations de débattement de la courroie.

Un dispositif de la présente invention est un dispositif de réglage d'une tension d'une courroie équipant un moteur à combustion interne. Le dispositif de réglage comprend un bras équipé d'une capsule mobile en rotation par rapport au bras.

Selon la présente invention, le dispositif de réglage comprend au moins un couple d'aimants permanents comprenant un premier aimant permanent et un deuxième aimant permanent.

De préférence, le premier aimant permanent équipe la capsule tandis que le deuxième aimant permanent équipe un organe d'emboîtement cylindrique sur lequel la capsule est montée mobile en rotation autour d'un axe de symétrie de l'organe d'emboîtement cylindrique.

Le dispositif de réglage comprend avantageusement un nombre pair de couples d'aimants permanents qui sont symétriquement répartis par rapport à l'axe de symétrie.

Selon une première variante de réalisation, en position d'équilibre, chaque couple d'aimants permanents est disposé en superposition axiale.

Selon une deuxième variante de réalisation, en position d'équilibre, chaque couple d'aimants permanents est disposé en superposition radiale.

L'organe d'emboîtement cylindrique et la capsule sont avantageusement agencés en barillet.

De préférence, les premiers aimants permanents respectifs de deux couples adjacents d'aimants permanents sont disposés en alternance au regard de leurs pôles magnétiques respectifs et les deuxièmes aimants permanents respectifs de deux couples adjacents d'aimants permanents sont également disposés en alternance au regard de leurs pôles magnétiques respectifs.

Le bras est avantageusement équipé d'une poulie. La poulie peut être au besoin pourvue d'une gorge périphérique circulaire de réception de la courroie.

Selon la présente invention, un système de transmission d'un couple-moteur fourni par le moteur à combustion interne est principalement reconnaissable en ce que le système de transmission comprend une courroie et un tel dispositif de réglage.

Une utilisation de la présente invention réside avantageusement en une utilisation d'un tel système de transmission pour un moteur à combustion interne équipant l'un quelconque d'un véhicule automobile, d'un véhicule poids-lourd, d'un bateau et d'un groupe électrogène.

D'autres caractéristiques et avantages de la présente invention apparaîtront à la lecture de la description qui va en être faite d'exemples de réalisation, en relation avec les figures des planches annexées, dans lesquelles :
- La figure 1 est une vue schématique partielle et en perspective d'un système de transmission d'un couple-moteur de la présente invention.
- La figure 2 est une vue schématique partielle et en coupe d'un dispositif de réglage de la présente invention, le dispositif de réglage étant constitutif du système de transmission illustré sur la figure 1.
- La figure 3 est une vue schématique en coupe d'une première variante de réalisation du dispositif de réglage illustré sur la figure précédente.
- La figure 4 est une vue schématique en coupe d'une deuxième variante de réalisation du dispositif de réglage illustré sur la figure 2.
- Les figures 5 à 7 sont des vues schématiques en coupe du dispositif de régalage selon la première variante de réalisation.
- La figure 8 est une vue schématique en coupe du dispositif de régalage selon la deuxième variante de réalisation.
- Les figures 9 et 10 sont des vues schématiques en perspective d'un bras et d'une capsule constitutifs du dispositif de réglage illustré sur la figure 3.
- Les figures 11 et 12 sont des vues schématiques en perspective d'un bras et d'une capsule constitutifs du dispositif de réglage illustré sur la figure 4.
- Les figures 13 et 14 sont des vues schématiques en perspective d'un bras et d'une capsule constitutifs du dispositif de réglage illustré sur la figure 3.
- Les figures 15 et 16 sont des vues schématiques en perspective d'un bras et d'une capsule constitutifs du dispositif de réglage illustré sur la figure 4.

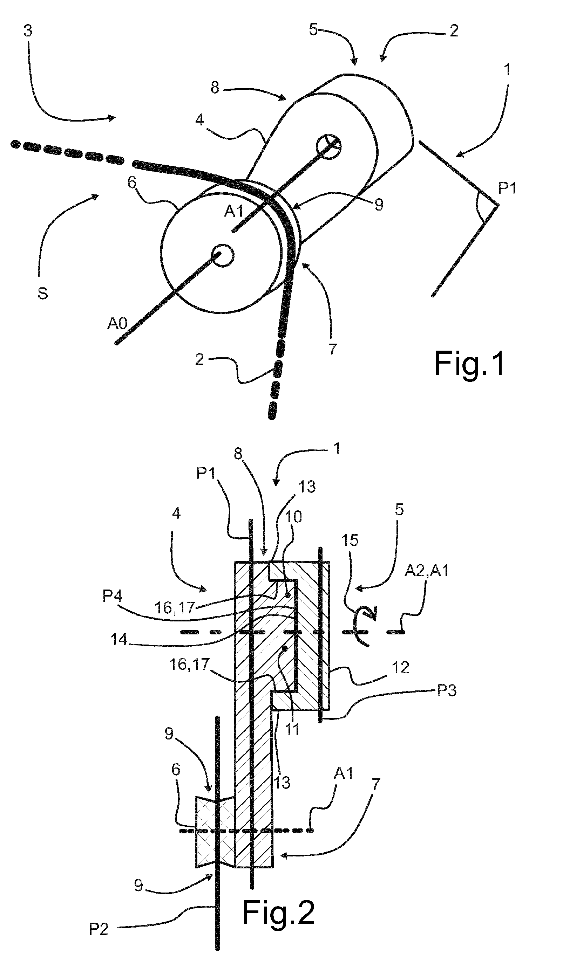

Sur la figure 1, est représenté partiellement un système de transmission S d'un couple-moteur fourni par un moteur à combustion interne. Le système de transmission S comprend une courroie 2 et un dispositif de réglage 1 d'une tension de la courroie 2. La courroie 2 est en relation avec le moteur à combustion interne par l'intermédiaire d'un organe de transmission du couple-moteur, tel qu'une poulie associée à un vilebrequin du moteur à combustion interne ou analogue. Le moteur à combustion interne est préférentiellement un moteur d'un véhicule automobile, mais est susceptible d'être un moteur d'un véhicule poids lourd, d'un bateau, voire d'un groupe électrogène. La courroie 2 est destinée à transmettre le couple-moteur généré par le moteur à combustion interne à d'autres organes et/ou accessoires, tels que ceux du véhicule automobile par exemple. Une telle transmission est notamment réalisée par l'intermédiaire d'organes de renvoi, tels que des poulies ou analogues, en relation avec la courroie 2. Une telle transmission est d'autant plus efficace que la courroie 2 est maintenue tendue à une tension précise, quelque soit le couple-moteur transmis par le moteur à combustion interne.

Le dispositif de réglage 1 de la présente invention est prévu pour tendre précisément la courroie 2 et pour amortir efficacement des débattements de la courroie 2, notamment lors de phases acycliques de fonctionnement du moteur à combustion interne au cours desquelles le couple-moteur varie entre une valeur maximale et une valeur minimale, potentiellement nulle. Autrement dit, le dispositif de réglage 1 est apte à maintenir précisément la courroie 2 à une tension déterminée et est à même d'amortir les débattements susvisés de la courroie 2. De plus, le dispositif de réglage 1 est simple et robuste

Le dispositif de réglage 1 comprend un bras 4 et une capsule 5 qui est rapportée par emboîtement sur le bras 4. Une poulie 6 est montée mobile en rotation sur le bras 4 autour d'un axe de rotation A0. Plus particulièrement, le bras 4 est à même de pivoter autour d'un axe de pivotement A1 qui est sensiblement orthogonal à un plan d'extension générale P1 du bras 4. Le bras 4 est monté sur un support quelconque du véhicule par l'intermédiaire de l'axe de pivotement A1. L'axe de rotation A0 est préférentiellement parallèle à l'axe de pivotement A1. Plus particulièrement, le bras 4 comporte une extrémité proximale 7 qui est pourvue de la poulie 6 et une extrémité distale 8 qui est équipée de la capsule 5.

En se reportant également sur la figure 2, la poulie 6 est de conformation globalement cylindrique et peut être pourvue d'une gorge périphérique circulaire 9 de réception de la courroie 2. La gorge périphérique circulaire 9 est ménagée à l'intérieur d'un plan de gorge P2 qui est parallèle au plan d'extension générale P1 du bras 4. L'extrémité distale 8 est équipée d'un organe d'emboîtement cylindrique 10 autour duquel la capsule 5 vient se positionner. A cet effet, la capsule 5 comporte un logement 11 pour la réception en contact coulissant de l'organe d'emboîtement cylindrique 10. La capsule 5 comprend une plaque 12 pourvue d'une jupe 13. La jupe 13 est conformée en un anneau pour entourer et envelopper l'organe d'emboîtement cylindrique 10. La plaque 12 vient quant à elle en butée contre une face de bout 14 de l'organe d'emboîtement cylindrique 10, de telle sorte que la capsule 5 coiffe l'organe d'emboîtement cylindrique 10. L'organe d'emboîtement cylindrique 10, le logement 11 et la jupe 13 comprennent un même axe de symétrie A2 qui est confondu avec l'axe de pivotement A1. La plaque 12 et la face de bout 14 de l'organe d'emboîtement cylindrique 10 sont quant à elles ménagées respectivement selon un plan de plaque P3 et un plan de bout P4 qui sont orthogonaux à l'axe de symétrie A2. Ces dispositions sont telles que la capsule 5 est apte à effectuer un mouvement rotatif 15 autour de son axe de symétrie A2. Le mouvement rotatif se réalise à partir d'un glissement en contact étroit d'une paroi interne 16 de la jupe 13 contre une paroi externe 17 de l'organe d'emboîtement cylindrique 10.

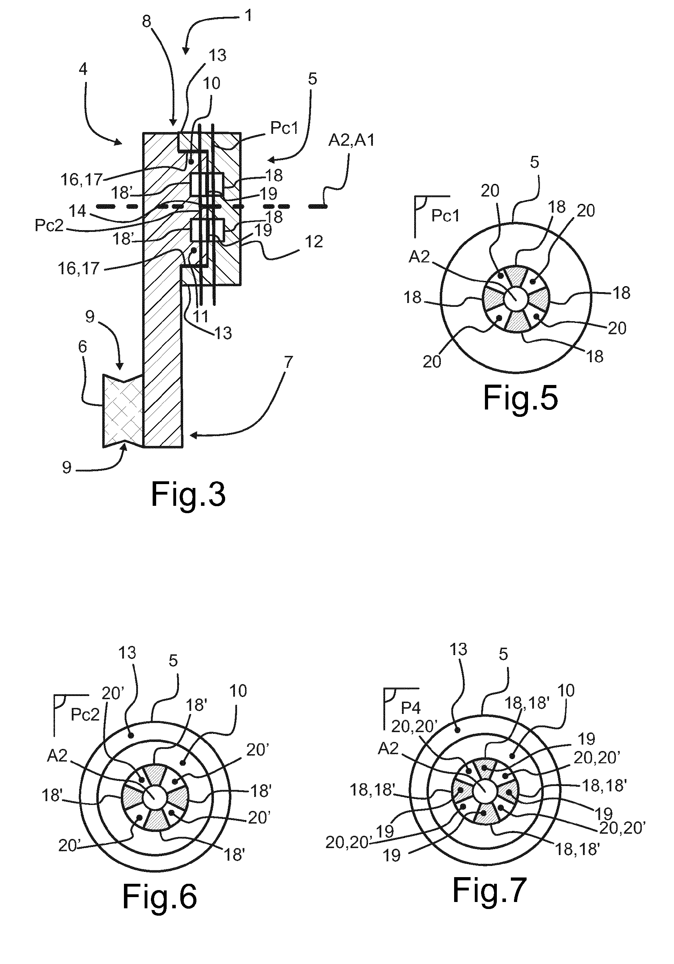

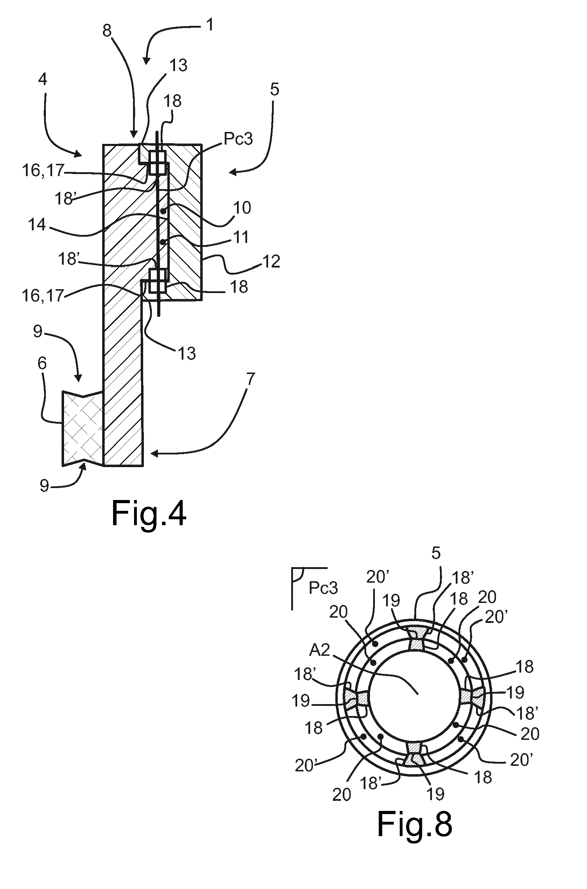

Sur la figure 3 et la figure 4, le dispositif de réglage 1 comprend au moins un couple d'aimants permanents 18,18'. Chaque couple d'aimants permanents 18,18' est formé d'un premier aimant permanent 18 équipant la capsule 5 et un deuxième aimant équipant l'organe d'emboîtement cylindrique 10. Selon une forme préférée de réalisation, le dispositif de réglage 1 comprend une pluralité de couples d'aimants permanents 18,18'. Dans ce cas-là, les couples d'aimants permanents 18,18' sont symétriquement répartis au tour de l'axe de symétrie A2. Selon les variantes illustrées sur les figures 3 à 12, les couples d'aimants permanents 18,18' sont au nombre de quatre, mais peuvent être indifféremment en un nombre supérieur pair, huit notamment. En position d'équilibre magnétique, les premiers aimants permanents 18 et les deuxièmes aimants permanents 18' d'un même couple sont disposés en vis-à-vis l'un de l'autre de telle sorte qu'un pôle de chaque premier aimant permanent 18 soit en vis-à-vis d'un pôle opposé d'un deuxième aimant permanent 18' correspondant. De préférence, le premier aimant permanent 18 et le deuxième aimant permanent 18' correspondant sont en contact l'un avec l'autre par l'intermédiaire d'une surface de contact 19 qui est constitués de leurs pôles opposés.

Selon une première variante de réalisation illustrée sur les figures 3, 5, 6, 7, 9 et 10, chaque couple d'aimant permanent 18,18' est disposé parallèlement à l'axe de symétrie A2. Selon la première variante, la face de contact 19 est ménagée orthogonalement à l'axe de symétrie A2. Autrement dit, les aimants permanents 18,18' sont disposés l'un par rapport à l'autre en superposition axiale par rapport à l'axe de symétrie A2.

Selon une deuxième variante de réalisation illustrée sur les figures 4, 8, 11 et 12, chaque couple d'aimant permanent 18,18' est disposé concentriquement par rapport à l'axe de symétrie A2. Selon la deuxième variante, la face de contact 19 est constituée d'une portion cylindrique comportant un axe de génération confondu avec l'axe de symétrie A2. Autrement dit encore, les couples d'aimants permanents 18,18' sont disposés l'un par rapport à l'autre en superposition radiale par rapport à l'axe de symétrie A2.

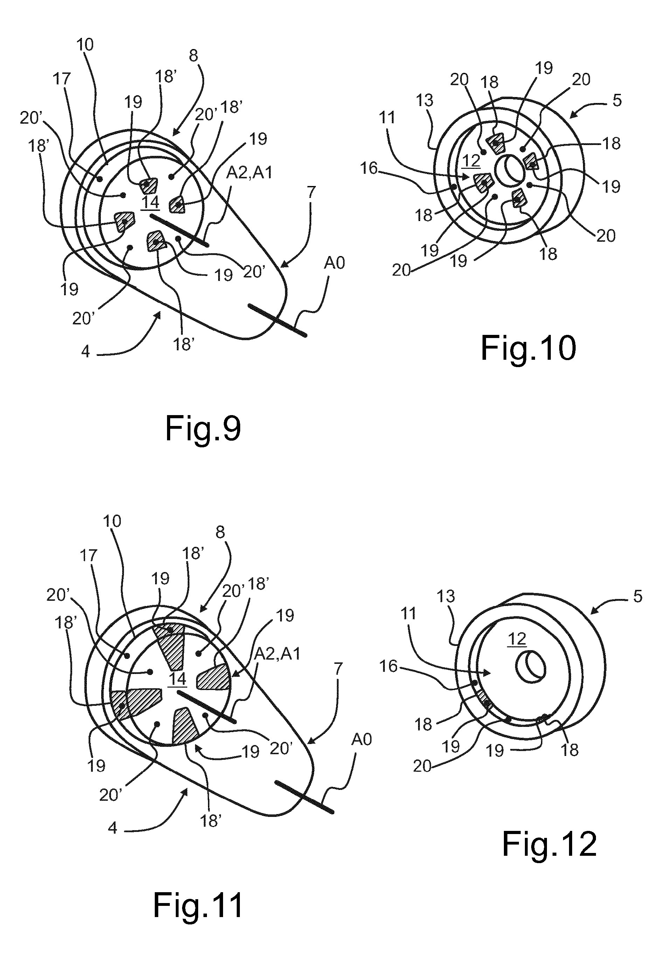

Deux premiers aimants permanents adjacents 18 sont espacés l'un de l'autre par l'intermédiaire d'un premier plot respectif 20 tandis que deux deuxièmes aimants permanents adjacents 18' sont espacés l'un de l'autre par l'intermédiaire d'un deuxième plot respectif 20'. Ces dispositions sont telles que selon la première variante de réalisation, l'organe d'emboîtement cylindrique 10 est agencé en un barillet axial pour le logement des premiers aimants permanents 18, tel qu'illustré sur la figure 9, tandis que la plaque 12 est également agencée en un barillet axial pour le logement des deuxièmes aimants permanents 18', tel que représenté sur la figure 10. Ces dispositions sont telles que selon la deuxième variante de réalisation, l'organe d'emboîtement cylindrique 10 est agencée en un barillet radial pour le logement des premiers aimants permanents 18, tel qu'illustré sur la figure 11, tandis que la plaque 12 est également agencée en un barillet radial pour le logement des deuxièmes aimants permanents 18', tel que représenté sur la figure 12.

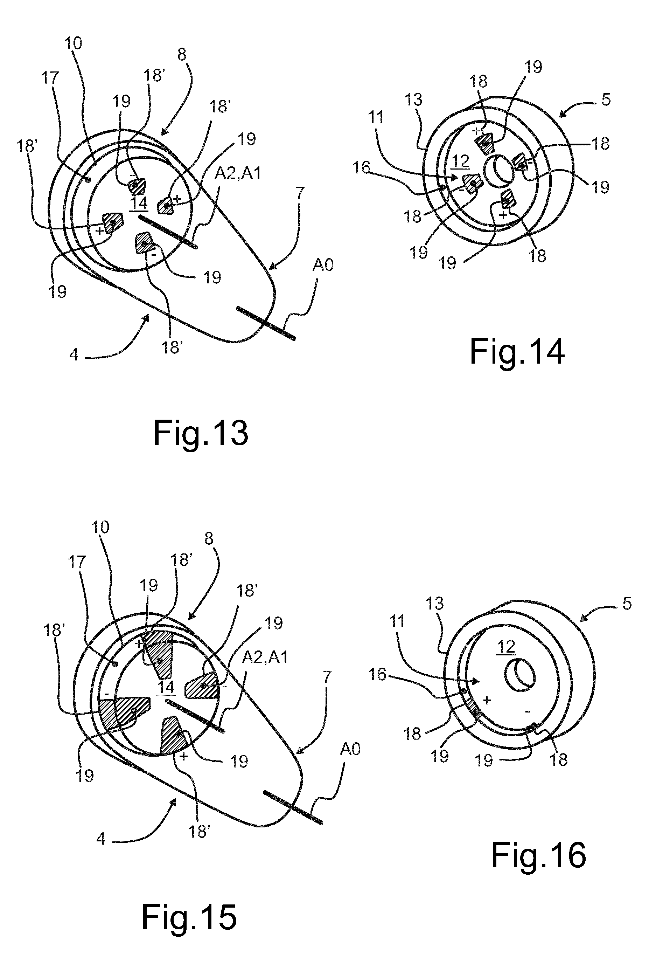

En se reportant sur les figures 13 à 16 qui illustrent les caractéristiques magnétiques du dispositif de réglage 1 représenté sur les figures 9 à 12 et selon les mêmes variantes, les premiers aimants permanents 18 d'une part et les deuxièmes aimants permanents 18' d'autre part sont disposés en alternance au regard de leur pôles magnétiques. Autrement dit, deux aimants permanents adjacents 18,18' présentent une face de contact respective 19 qui est magnétiquement distincte de l'une à l'autre. Autrement dit encore, lorsqu'une première face de contact 19 est magnétiquement positive, la face de contact adjacente 19' est négative. C'est pourquoi les premiers aimants permanents 18 d'une part et les deuxièmes aimants permanents 18' d'autre part sont préférentiellement en nombre pair, afin de permettre une telle alternance. La capsule 5 étant mobile en rotation autour de l'axe de symétrie A2 et autour de l'organe d'emboîtement cylindrique 10, il en découle qu'en position d'équilibre magnétique, les premiers aimants permanents 18 et les deuxièmes aimants permanents 18' d'un même couple sont disposés en vis-à-vis l'un de l'autre, de telle sorte qu'un pôle de chaque premier aimant permanent 18 soit en vis-à-vis d'un pôle opposé d'un deuxième aimant permanent 18' correspondant. La position d'équilibre magnétique est celle où une énergie magnétique du dispositif de réglage 1 est minimale.

L'ensemble de ces dispositions est telle que lorsque la mise sous tension de la courroie 2 n'est pas optimisée ou lorsque des débattements de la courroie 2 apparaissent, par exemple lors des phases acycliques de fonctionnement du moteur à combustion interne, l'équilibre magnétique est rompu à partir d'une modification du champ magnétique procuré par chaque couple d'aimant permanent 18,18'. Il en résulte une force résultante qui est proportionnelle à un déplacement angulaire de chaque premier aimant permanent 18', qui est mobile, par rapport au deuxième aimant permanent 18 correspondant, qui est solidaire de la capsule 5. Une telle force résultante génère un couple qui est également proportionnel au dit déplacement angulaire. Un tel couple est avantageusement assimilable à une raideur d'un organe de rappel, du type ressort hélicoïdal, ressort à spirale ou analogue, sans en présenter l'inconvénient d'une fragilité inhérente à toute pièce mécaniquement sollicitée. Un tel dispositif de réglage s'avère simple et robuste.

De plus, la variation du champ magnétique créé des courants induits qui sont dissipés lors de leur traversée de l'organe d'emboîtement cylindrique 10 et de la capsule 5 qui sont préférentiellement réalisés en un matériau métallique. Une telle dissipation par effet Joule constitue un amortissement procuré par le dispositif de réglage 1.

Un tel dispositif de réglage 1 présente de nombreux avantages.

En premier lieu, le dispositif de réglage 1 de la présente invention est robuste et permet de tendre la courroie 2 sans risque de rupture en raison d'un remplacement d'une raideur mécanique par une raideur magnétique.

En deuxième lieu, le dispositif de réglage 1 de la présente invention autorise un calibrage de la raideur magnétique en fonction d'un agencement, d'un nombre et d'une force choisis des couples d'aimants permanents 18,18'.

En troisième lieu, le dispositif de réglage 1 permet une raideur magnétique non-linéaire en raison d'une augmentation du couple généré lors d'une approche de bornes externes des couples d'aimants permanents 18,18'.

## Revendications

1. Dispositif de réglage (1) d'une tension d'une courroie (2) équipant un moteur à combustion interne, le dispositif de réglage (1) comprenant une capsule (5) et un bras (4) mobile en rotation par rapport à la capsule (5), **caractérisé en ce que** le dispositif de réglage (1) comprend au moins un couple d'aimants permanents (18,18') comprenant un premier aimant permanent (18) et un deuxième aimant permanent (18').

2. Dispositif de réglage (1) selon la revendication précédente, **caractérisé en ce que** le premier aimant permanent (18) équipe la capsule (5) tandis que le deuxième aimant permanent (18') équipe un organe d'emboîtement cylindrique (10) sur lequel la capsule (5) est montée mobile en rotation autour d'un axe de symétrie (A2) de l'organe d'emboîtement cylindrique (10).

3. Dispositif de réglage (1) selon la revendication 2, **caractérisé en ce que** le dispositif de réglage (1) comprend un nombre pair de couples d'aimants permanents (18,18') qui sont symétriquement répartis par rapport à l'axe de symétrie (A2).

4. Dispositif de réglage (1) selon l'une quelconque des revendications précédentes, **caractérisé en ce qu**'en position d'équilibre chaque couple d'aimants permanents (18,18') est disposé en superposition axiale.

5. Dispositif de réglage (1) selon l'une quelconque des revendications 1 à 3, **caractérisé en ce qu'**en position d'équilibre chaque couple d'aimants permanents (18,18') est disposé en superposition radiale.

6. Dispositif de réglage (1) selon l'une quelconque des revendications 4 et 5, **caractérisé en ce que** l'organe d'emboîtement cylindrique (10) et la capsule (5) sont agencés en barillet.

7. Dispositif de réglage (1) selon l'une quelconque des revendications 3 à 6, **caractérisé en ce que** les premiers aimants permanents respectifs (18) de deux couples adjacents d'aimants permanents (18,18') sont disposés en alternance au regard de leurs pôles magnétiques respectifs et **en ce que** les deuxièmes aimants permanents respectifs (18') de deux couples adjacents d'aimants permanents (18,18') sont également disposés en alternance au regard de leurs pôles magnétiques respectifs.

8. Dispositif de réglage (1) selon l'une quelconque des revendications précédentes, **caractérisé en ce que** le bras (4) est équipé d'une poulie (6).

9. Dispositif de réglage (1) selon la revendication 8, **caractérisé en ce que** la poulie est pourvue d'une gorge périphérique circulaire (9) de réception de la courroie (2).

10. Système de transmission (S) d'un couple-moteur fourni par le moteur à combustion interne, **caractérisé en ce que** le système de transmission (S) comprend une courroie (2) et un dispositif de réglage (1) selon l'une quelconque des revendications précédentes.

11. Utilisation d'un système de transmission (S) selon la revendication précédente pour un moteur à combustion interne équipant l'un quelconque d'un véhicule automobile, d'un véhicule poids-lourd, d'un bateau et d'un groupe électrogène.
